(19) Europäisches Patentamt
European Patent Office
Office européen des brevets

(11) **EP 0 860 713 B1**

(12) **FASCICULE DE BREVET EUROPEEN**

(45) Date de publication et mention
de la délivrance du brevet:
**27.01.2010 Bulletin 2010/04**

(51) Int Cl.:
***G01S 13/90*** *(2006.01)*

(21) Numéro de dépôt: **98400261.8**

(22) Date de dépôt: **06.02.1998**

(54) **Procédé et dispositif d'évaluation du déphasage perturbateur des signaux d'un radar à synthèse d'ouverture et applications**

Verfahren und Vorrichtung zur Bewertung der störenden Phasenschiebung von Signalen in einem Radar mit synthetischer Apertur und Verwendungen dazu

Method and device for evaluation of disturbing phase shift of signals in a synthetic aperture radar and applications

(84) Etats contractants désignés:
**BE DE ES GB IT NL**

(30) Priorité: **20.02.1997 FR 9702007**

(43) Date de publication de la demande:
**26.08.1998 Bulletin 1998/35**

(73) Titulaire: **MBDA France**
**92358 Le Plessis Robinson Cedex (FR)**

(72) Inventeur: **Peyregne, Rémi**
**75012 Paris (FR)**

(74) Mandataire: **Bonnetat, Christian**
**Bloch & Bonnétat**
**23bis, rue de Turin**
**75008 Paris (FR)**

(56) Documents cités:
**WO-A-88/10434    US-A- 5 394 151**

**Description**

La présente invention concerne un procédé d'évaluation du déphasage perturbateur des signaux radar d'un radar à synthèse d'ouverture et un dispositif pour la mise en oeuvre de ce procédé, ainsi que des applications dudit procédé.

On sait que l'observation de la terre à l'aide de radars à synthèse d'ouverture embarqués sur un aéronef est la source d'un nombre élevé d'applications, tant dans le domaine civil (agriculture, géologie, océanographie, ...) que dans le domaine militaire (observation d'un champ de bataille, recalage de la navigation d'un missile, ...).

Un tel radar à synthèse d'ouverture présente de très nombreux avantages, notamment pour réaliser une cartographie d'un terrain survolé, qui expliquent le grand intérêt et le développement important de ce type de radar, en particulier :

- il peut être utilisé par tout temps ;
- il permet d'élaborer des images de très haute résolution ;
- il présente un encombrement réduit ; et
- ses traitements sont peu dépendants de la distance d'observation.

De façon connue, un tel radar à synthèse d'ouverture comporte des moyens pour réaliser successivement les opérations suivantes :

- émettre un rayonnement électromagnétique en direction d'un territoire observé et survolé par l'aéronef porteur dudit radar ;
- détecter un signal correspondant audit rayonnement électromagnétique renvoyé par ledit territoire survolé et observé ;
- effectuer un traitement de détermination de distance, à partir dudit signal détecté ;
- effectuer un traitement de focalisation destiné à corriger un déphasage perturbateur existant dans ledit signal détecté et dû notamment au déplacement dudit radar à synthèse d'ouverture de manière à obtenir un signal corrigé ;
- effectuer un traitement de détermination de fréquence à partir dudit signal corrigé ; et
- effectuer un traitement de transposition destiné à transposer, dans un repère de référence lié audit territoire observé, les résultats obtenus à partir des opérations précédentes et définis dans un repère de distance et de fréquence lié au radar, de manière à former une image radar définie dans ledit repère de référence lié au territoire observé.

Toutefois, un tel radar à synthèse d'ouverture présente l'inconvénient que certaines des opérations citées précédemment, notamment le traitement de focalisation, nécessitent pour leur mise en oeuvre des données de navigation très précises, relatives à l'aéronef porteur dudit radar.

Ces données de navigation sont généralement déterminées par des équipements auxiliaires de navigation embarqués sur l'aéronef. Aussi, pour être performante, la mise en oeuvre dudit radar à synthèse d'ouverture impose de lourdes contraintes sur la précision desdits équipements auxiliaires, ce qui entraîne des conséquences négatives quant au coût, à la masse et au volume de ces derniers.

Pour remédier à cet inconvénient, on connaît des moyens qui permettent de compenser les erreurs dues aux mouvements de l'aéronef porteur du radar, et qui sont notamment susceptibles de déterminer ledit déphasage perturbateur, sans utiliser lesdits équipements auxiliaires, en analysant simplement le signal radar détecté.

Ces moyens connus mettent en oeuvre des solutions complexes de traitement de signaux qui permettent de déterminer un gradient Doppler représentatif dudit déphasage perturbateur.

Une première solution connue, divulguée par la demande de brevet français n° 95 14555 déposée le 8 décembre 1995 par la demanderesse, propose de mesurer le décalage fréquentiel moyen entre deux images radar et de déterminer directement ledit gradient Doppler à partir de ce décalage fréquentiel moyen. Cette première solution, qui permet un traitement rapide, est toutefois peu robuste.

Une seconde solution connue consiste à engendrer une pluralité d'images radar et à sélectionner l'image optimale en ce qui concerne le contraste, ce qui permet d'en déduire le gradient Doppler.

Cette seconde solution, bien que simple et robuste, nécessite une charge de calcul élevée. Aussi, pour diminuer un peu cette charge de calcul, on effectue généralement le calcul de façon itérative, au détriment de la robustesse de la solution (apparition de problèmes d'initialisation et de convergence vers des maxima locaux du contraste, maîtrise réduite de la charge de calcul, ...).

Par ailleurs, par le document US-A-5 394 151, on connaît un appareil et une méthode pour produire des images radar en trois dimensions. Pour ce faire, il est prévu d'utiliser des signaux retour de cible, qui sont engendrés par un radar à synthèse d'ouverture d'un véhicule se déplaçant le long d'un trajet qui est curviligne par rapport à la cible.

En outre, par le document WO-88/10434 A, on connaît un radar à synthèse d'ouverture particulier, qui est

EP 0 860 713 B1

formé de manière à pouvoir corriger des erreurs d'image dues à une trajectoire de vol qui n'est pas suffisamment rectiligne.

La présente invention a pour objet de remédier aux inconvénients précités. Elle concerne un procédé de mise en oeuvre rapide et robuste, permettant d'évaluer le déphasage perturbateur des signaux radar d'un radar à synthèse d'ouverture, sans utiliser d'informations relatives au mouvement de l'aéronef porteur dudit radar.

A cet effet, selon l'invention, ledit procédé est remarquable en ce que :

- on effectue une pluralité d'opérations complexes dans chacune desquelles :

   A/ on mesure N signaux radar successifs, N étant un nombre entier prédéfini, lesdits signaux radar étant des signaux complexes définis dans le domaine temporel ;

   B/ on répète N/(2K) fois les opérations suivantes, i variant de 1 à N/(2K), K étant un entier prédéfini inférieur à N/2 :

   $\alpha$) à partir des N signaux radar successifs mesurés, on calcule le produit conjugué desdits signaux radar initiaux et desdits signaux radar décalés de i$\tau$, $\tau$ étant une variable temporelle ;

   $\beta$) on calcule le double du carré de la transformée de Fourier dudit produit conjugué ;

   $\gamma$) on réalise une transposition de manière à faire dépendre d'un gradient Doppler $\mu$ ledit double du carré de la transformée de Fourier dudit produit conjugué, calculé à l'étape $\beta$) et dépendant de la fréquence $\underline{f}$, et ceci en remplaçant la fréquence $\underline{f}$ par l'expression ($\mu$.i.$\tau$), $\tau$ étant une variable temporelle ;

   C/ pour les valeurs de $\mu$, on calcule la racine carrée de la somme des résultats obtenus à l'étape $\gamma$) pour les N/(2K)variations de $\underline{i}$, de manière à obtenir l'écart-type du spectre de puissance $\sigma$ des signaux radar ;

   D/ à partir des signaux radar mesurés à l'étape A/, on détermine la puissance moyenne $\underline{m}$ desdits signaux ;

   E/ à partir dudit écart-type du spectre de puissance $\sigma$ et de ladite puissance moyenne $\underline{m}$, on calcule le contraste $\chi$ à partir de la relation $\chi = (\sigma/m)$ ; et

- à partir de la pluralité de valeurs de contraste ainsi calculées, on détermine le maximum dudit contraste, de manière à mettre en évidence un gradient Doppler optimal $\mu$o, à partir duquel on évalue ledit déphasage perturbateur, à l'aide de l'expression exp(j$\pi\mu$ot$^2$) qui représente ledit déphasage perturbateur.

Ainsi, grâce à l'invention, on évalue ledit déphasage perturbateur directement à partir des signaux radar détectés, donc sans utiliser d'informations fournies par des équipements auxiliaires de navigation.

De plus, ledit procédé qui préconise une optimisation du contraste permet une mise en oeuvre rapide et robuste. En outre, au contraire de la seconde solution connue précitée préconisant également une optimisation du contraste, le procédé conforme à l'invention s'affranchit de toute approche itérative, ce qui est bien entendu avantageux pour la vitesse de mise en oeuvre et la robustesse (pas de problème d'initialisation ou de convergence vers des maxima locaux du contraste, parfaite maîtrise de la charge de calcul).

De plus, de façon avantageuse, à l'étape D/, la puissance moyenne $\underline{m}$ est calculée à partir de l'expression :

$$m = \sum_{j=1}^{j=N} \left| sj \right|^2$$

les signaux sj étant les signaux radar mesurés à l'étape A/.

En outre, avantageusement, le maximum du contraste est déterminé par moyenne de ladite pluralité des valeurs de contraste calculées.

La présente invention concerne également un dispositif pour évaluer le déphasage perturbateur des signaux radar d'un radar à synthèse d'ouverture.

Selon l'invention, ledit dispositif est remarquable en ce qu'il comporte :

- des premiers moyens pour calculer l'écart-type du spectre de puissance des N signaux radar successifs mesurés, lesdits premiers moyens comprenant des éléments de calcul qui réalisent N/(2K) fois des opérations à partir de signaux radar, variant de 1 à N/(2K) et K étant un entier prédéfini inférieur à N/2, N étant un nombre entier prédéfini, lesdits premiers moyens comprenant :

   · un élément de calcul qui calcule le produit conjugué des signaux radar initiaux et des signaux radar décalés de i$\tau$, $\tau$ étant une variable temporelle ;

3

· un élément de calcul qui calcule la transformée de Fourier dudit produit conjugué ;

· un élément de calcul qui calcule le double du carré de ladite transformée de Fourier ; et

· un élément de calcul qui réalise une transposition de manière à faire dépendre d'un gradient Doppler $\mu$ ledit double du carré de ladite transformée de Fourier, qui dépend de la fréquence $\underline{f}$, en remplaçant la fréquence $\underline{f}$ par l'expression $(\mu.i.\tau)$, $\tau$ étant une variable temporelle, lesdits premiers moyens comprenant de plus un élément de calcul qui calcule, pour les valeurs de $\mu$, la racine carrée de la somme des différents résultats obtenus pour les N/(2K) variations de $\underline{i}$ de manière à former ledit écart-type du spectre de puissance $\sigma$ ;

- des deuxièmes moyens pour calculer la puissance moyenne $\underline{m}$ desdits signaux radar reçus ; et

- des troisièmes moyens reliés auxdits premiers et deuxièmes moyens, pour calculer, à partir des résultats obtenus desdits premiers et deuxièmes moyens, des contrastes, à l'aide de la relation $\chi = (\sigma/m)$, et pour déterminer, à partir de la pluralité de valeurs de contraste ainsi calculées, le maximum dudit contraste de manière à mettre en évidence un gradient Doppler optimal $\mu o$, à partir duquel est évalué ledit déphasage perturbateur, à l'aide de l'expression $\exp(j\pi\mu ot^2)$ qui représente ledit déphasage perturbateur.

Par ailleurs, la présente invention concerne deux applications du dispositif précité.

Une première application est relative à un radar à synthèse d'ouverture embarqué à bord d'un aéronef et comportant de façon connue :

- des moyens pour émettre un rayonnement électromagnétique en direction d'un territoire observé et survolé par ledit aéronef ;

- des moyens pour détecter un signal correspondant audit rayonnement électromagnétique renvoyé par ledit territoire observé et survolé ;

- des moyens pour effectuer un traitement de détermination de distance, à partir dudit signal détecté ;

- des moyens de focalisation destinés à corriger un déphasage perturbateur existant dans ledit signal détecté et dû notamment au déplacement dudit radar à synthèse d'ouverture de manière à obtenir un signal corrigé ;

- des moyens pour effectuer un traitement de détermination de fréquence, à partir dudit signal corrigé ; et

- des moyens de transposition destinés à transposer, dans un repère de référence lié audit territoire observé, les résultats obtenus à partir des opérations précédentes et définis dans un repère de distance et de fréquence lié au radar, de manière à former une image radar définie dans ledit repère de référence lié au territoire observé.

Selon l'invention, ledit radar est remarquable en ce que :

- dans un premier mode de réalisation, il comporte le dispositif spécifié ci-dessus qui comprend une liaison d'entrée qui est liée à la liaison liant les moyens de focalisation aux moyens pour effectuer un traitement de détermination de distance, et une liaison de sortie qui est raccordée aux moyens de focalisation, et lesdits moyens de focalisation utilisent des informations transmises par ledit dispositif ; et

- dans un second mode de réalisation, pour déterminer ledit déphasage perturbateur, lesdits moyens de focalisation utilisent uniquement des informations transmises par ledit dispositif.

Dans ce second mode de réalisation, de préférence, les moyens de transposition utilisent également des informations transmises par ledit dispositif, ce qui permet de réaliser un radar à synthèse d'ouverture complètement autonome vis-à-vis des équipements de navigation.

Une seconde application concerne un dispositif pour déterminer des informations cinématiques d'un aéronef porteur d'un radar à synthèse d'ouverture, ledit dispositif comportant, de façon connue :

- des premiers moyens de calcul pour déterminer le gradient Doppler du déphasage perturbateur des signaux radar détectés par ledit radar à synthèse d'ouverture ; et

- des seconds moyens de calcul pour déduire dudit gradient Doppler lesdites informations cinématiques, par exemple la vitesse et/ou l'accélération radiale de l'aéronef.

Dans ce cas, selon l'invention, lesdits premiers moyens de calcul sont réalisés sous forme du dispositif précité conforme à l'invention.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 est le schéma synoptique d'une première application du dispositif conforme à l'invention.

La figure 3 est le schéma synoptique d'une seconde application du dispositif conforme à l'invention.

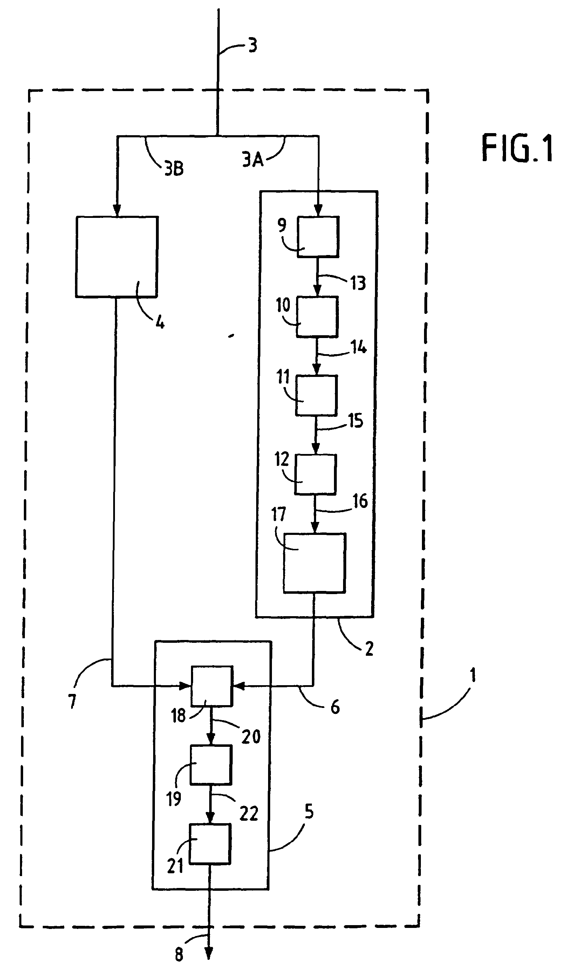

Le dispositif 1 conforme à l'invention et représenté schématiquement sur la figure 1 est destiné à évaluer le déphasage perturbateur des signaux radar d'un radar à synthèse d'ouverture, non représenté sur cette figure 1.
De façon connue, le signal radar s(t) détecté par un radar à synthèse d'ouverture peut s'écrire sous la forme

$$s(t) = A(t).exp[j\phi(t)].exp(j\pi\mu ot^2)$$

dans laquelle :

- A(t) représente une amplitude ;
- $\phi$(t) est la phase ; et
- l'expression $exp(j\pi\mu ot^2)$ représente le déphasage perturbateur dû notamment au déplacement dudit radar.

Par conséquent, pour connaître ledit déphasage perturbateur, il suffit de déterminer le gradient Doppler $\mu$o.
Pour ce faire, selon l'invention, ledit dispositif 1 comporte :

- des moyens 2 pour calculer l'écart-type du spectre de puissance des signaux radar précisés ci-dessous et reçus par une branche 3A d'une liaison 3 dédoublée ;
- des moyens 4 pour calculer la puissance moyenne desdits signaux radar reçus par une branche 3B de la liaison 3 ; et
- des moyens 5 reliés aux moyens 2 et 4 respectivement par l'intermédiaire de liaisons 6 et 7, pour calculer, à partir des résultats obtenus par lesdits moyens 2 et 4, le contraste d'une image radar, pour déterminer le maximum dudit contraste et pour en déduire ledit gradient Doppler$\mu$ o. Les moyens 5 peuvent transmettre le résultat obtenu, par l'intermédiaire d'une liaison 8, à un dispositif utilisateur non représenté sur la figure 1.

Pour la mise en oeuvre du dispositif 1, ce dernier reçoit, pour chacune d'une pluralité d'opérations complexes, N signaux radar du radar à synthèse d'ouverture, lesdits signaux étant des signaux complexes définis dans le domaine temporel et précisés ci-dessous, et N étant un entier prédéfini. Ces signaux sont transmis auxdits moyens 2 et 4.
Selon l'invention, lesdits moyens 2 comprennent notamment des éléments de calcul 9 à 12 qui réalisent i fois les mêmes opérations à partir de signaux radar différents, comme indiqué ci-dessous, i variant de 1 à N/(2K) et K étant un entier prédéfini, inférieur ou égal à N/2 et de préférence supérieur ou égal à 10.
On décrit ci-après les traitements réalisés par lesdits éléments de calcul 9 à 12 reliés ensemble respectivement par l'intermédiaire de liaisons 13 à 15, pour une opération i quelconque :

- l'élément de calcul 9 relié à la liaison 3A calcule le produit conjugué du signal radar initial s(t) et d'un signal radar s(t-i$\tau$) décalé de i$\tau$, $\tau$ étant une variable temporelle ;
- l'élément de calcul 10 calcule la transformée de Fourier dudit produit conjugué ;
- l'élément de calcul 11 calcule une expression mathématique correspondant au double du carré de ladite transformée de Fourier ; et
- l'élément de calcul 12 réalise une transposition de ladite expression mathématique qui dépend de la fréquence f de manière à la faire dépendre du gradient Doppler $\mu$ vérifiant la relation $\mu$=f/(i.$\tau$).

Les résultats des calculs de l'élément de calcul 12 sont transmis par une liaison 16 à un élément de calcul 17 qui calcule la racine carrée de la somme des différents résultats obtenus par les i opérations successives de manière à former l'écart-type du spectre de puissance.
Par conséquent, l'écart-type $\sigma$ calculé par lesdits moyens 2 vérifie l'expression :

$$\sigma(\mu) = \sqrt{2 \sum_{i=1}^{i=N/(2K)} |F[s(t).s^*(t-i\tau]_{(f=\mu i\tau)}|^2} \qquad (1)$$

$s^*$(t-i$\tau$) étant le conjugué de s(t-i$\tau$).

On précise à présent la justification mathématique de cette expression (1).

De façon connue, l'écart-type σ du spectre de puissance est défini par la relation :

$$\sigma(\mu) = \sqrt{\int_{-\infty}^{+\infty} (Pfoc(f))^2 df - m^2}$$

dans laquelle :

- Pfoc(f) est le spectre de puissance ;
- f est la fréquence ;
- m est la puissance moyenne ; et
- μ est le gradient Doppler.

On notera que dans les modes de calcul usuels, d'optimisation du contraste, l'écart-type σ qui dépend du gradient μ doit être calculé pour toutes les valeurs de μ existantes, ce qui n'est pas le cas dans la présente invention, comme on le précisera ci-dessous.

A l'aide du théorème de Parseval, on obtient la relation :

$$\sigma(\mu) = \sqrt{\int_{-\infty}^{+\infty} |Pfoc(f)|^2 df - m^2}$$
$$= \sqrt{\int_{-\infty}^{+\infty} |F^{-1}[Pfoc(f)]|^2 d\tau - m^2},$$

$F^{-1}$ étant la transformée de Fourier inverse et $\tau$ la variable temporelle.

Or, la transformée de Fourier inverse du spectre de puissance est égale à la fonction d'autocorrélation du signal temporel (théorème de Wiener-Kintchine) qui vérifie donc :

$$Rfoc(\tau) = F^{-1}[Pfoc(f)]$$

$$= \int_{-\infty}^{+\infty} sfoc(t)s^*foc(t-\tau) \, dt,$$

sfoc(t) étant le signal radar complexe dans le domaine temporel, après le traitement de focalisation et $s^*foc(t-\tau)$ étant le conjugué de sfoc(t-τ), ce qui permet de déduire l'expression suivante de l'écart-type σ :

$$\sigma(\mu) = \sqrt{\int_{-\infty}^{+\infty} |Rfoc(\tau)]|^2 d\tau - m^2}$$

A partir des propriétés suivantes de la fonction d'autocorrélation :

$$Rfoc(0) = m \qquad \text{puissance moyenne}$$

$$Rfoc(-\tau) = R^*foc(\tau) \qquad \text{propriété de symétrie,}$$

$R^*foc(\tau)$ étant le conjugué de Rfoc(τ), on obtient l'expression simplifiée :

$$\sigma(\mu) = \sqrt{2 \int_{\tau>0} |Rfoc(\tau)]|^2 \, d\tau}$$

On calcule à présent la valeur de Rfoc(r) à partir d'une analyse fréquentielle du signal s(t) non focalisé.
On sait que le traitement de focalisation du signal s(t) consiste à effectuer l'opération suivante :

$$sfoc(t) = s(t) \exp(-j\tau\mu t^2).$$

En intégrant cette expression dans la fonction d'autocorrélation Rfoc($\tau$), on obtient la relation :

$$Rfoc(\tau) = \int_{-\infty}^{+\infty} sfoc(t)s^*foc(t-\tau) \, dt$$

$$= \exp(j\pi\mu\tau^2) \int_{-\infty}^{+\infty} s(t)s^*(t-\tau)\exp(-j2\pi\mu\tau t) \, dt$$

$$= \exp(j\pi\mu\tau^2)F[s(t).s^*(t-\tau)]_{f=\mu\tau}$$

F étant la transformée de Fourier.
On en déduit finalement l'expression suivante (2) de l'écart-type :

$$\sigma(\mu) = \sqrt{2 \int_{\tau>0} |F[s(t).s^*(t-\tau)]_{f=\mu\tau}|^2 \, d\tau} \qquad (2)$$

De plus, par la transposition de cette expression (2) dans le domaine numérique, on obtient l'expression (1) précitée utilisée pour la mise en oeuvre de la présente invention.
Par conséquent, au contraire des méthodes connues de calcul d'optimisation du contraste qui nécessitent N calculs pour l'écart-type à partir des N signaux radar détectés, le procédé conforme à l'invention est mis en oeuvre à partir uniquement de N/(2K) calculs de l'écart-type, ce qui entraîne une diminution importante de la charge de calcul, par exemple d'un facteur 20 lorsque K est égal à 10 et d'un facteur 200 lorsque K est égal à 100.
Par ailleurs, les moyens 4 calculent la puissance moyenne $\underline{m}$ à partir de l'expression :

$$m = \sum_{j=1}^{j=N} |sj|^2 \qquad (3)$$

les signaux sj étant les signaux radar reçus par la liaison 3B.
Pour justifier l'expression (3), on notera que, de façon connue, la puissance moyenne s'écrit :

$$m = \int_{-\infty}^{+\infty} Pfoc(f)df$$

$$= \int_{-\infty}^{+\infty} |Sfoc(f)|^2 \, df,$$

Pfoc(f) et Sfoc(f) correspondant respectivement au spectre de puissance et au signal complexe, dans le domaine fréquentiel, après traitement de focalisation.

En utilisant le théorème de Parceval, on obtient :

$$m = \int_{-\infty}^{+\infty} |sfoc(t)|^2 \, dt$$

$$= \int_{-\infty}^{+\infty} |s(t)\exp(-j\pi\mu t^2)|^2 \, dt,$$

s(t) et sfoc(t) correspondant respectivement au signal radar complexe dans le domaine temporel, avant et après traitement de focalisation.

On peut en déduire l'expression de la puissance moyenne à partir du signal s(t) non focalisé :

$$m = \int_{-\infty}^{+\infty} |s(t)|^2 \, dt \qquad (4),$$

indépendant de $\mu$.

La puissance moyenne $\underline{m}$ peut donc être calculée une fois pour toute, uniquement à partir du signal radar complexe non focalisé s(t).

Finalement, en transposant cette expression (4) dans le domaine numérique, on obtient l'expression (3) utilisée par les moyens 4.

Par ailleurs, les moyens 5 comportent :

- un élément de calcul 18 qui calcule le contraste $\chi$ à partir des valeurs $\sigma$ et $\underline{m}$ reçues respectivement par les liaisons 6 et 7, au moyen de la relation $\chi = \sigma/m$ ;
- un élément de calcul 19 qui est relié par une liaison 20 à l'élément de calcul 18 et qui calcule un contraste moyen $\chi m$ à l'aide de la relation $\chi m = \chi/N$ ; et
- un élément de calcul 21 qui est relié par une liaison 22 à l'élément de calcul 19 et qui détermine, de façon connue, le maximum dudit contraste par moyenne des contrastes moyens de la pluralité desdites opérations complexes, de manière à mettre en évidence le gradient Doppler optimal $\mu o$ recherché.

Ce dernier peut être transmis à un dispositif utilisateur par la liaison 8.

Ainsi, grâce à l'invention, on évalue ledit gradient Doppler $\mu o$ représentatif du déphasage perturbateur directement à partir des signaux radar détectés, donc sans utiliser d'informations fournies par des équipements auxiliaires de navigation.

De plus, le dispositif 1 conforme à l'invention est rapide et robuste.

Ledit dispositif 1 peut être mis en oeuvre dans de nombreuses applications.

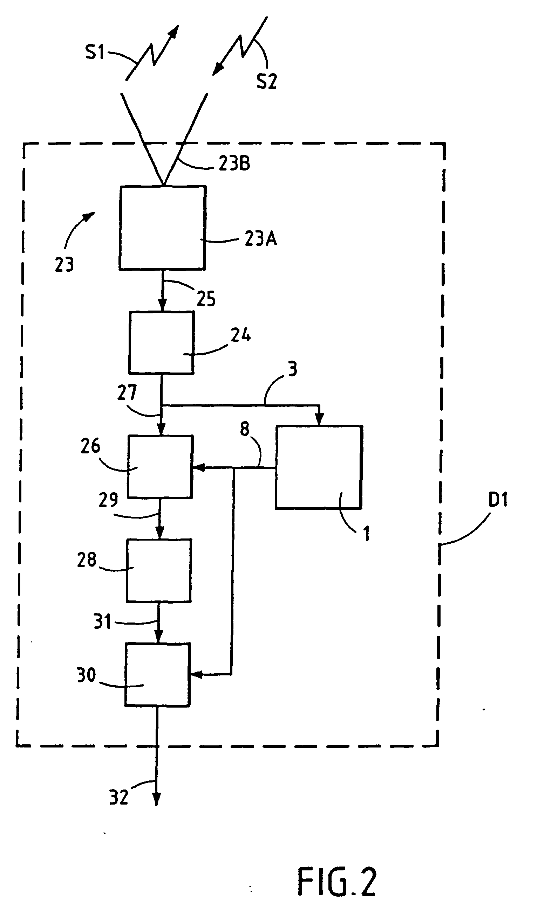

Une première application représentée schématiquement sur la figure 2 concerne un radar D1 à synthèse d'ouverture.

Ce radar D1 est monté sur un aéronef non représenté et est utilisé pour observer un territoire survolé par ledit aéronef.

De façon connue, un tel radar D1 à synthèse d'ouverture comporte :

- des moyens 23 pour émettre un rayonnement électromagnétique S1 en direction d'un territoire observé et survolé par ledit aéronef ;
- des moyens 23 pour détecter un signal S2 correspondant audit rayonnement électromagnétique renvoyé par ledit territoire. Lesdits moyens 23 d'émission et de réception sont réalisés, de préférence, sous forme d'un système électronique 23A comportant une antenne 23B d'émission et de réception ;
- des moyens 24 reliés par une liaison 25 auxdits moyens 23 et susceptibles d'effectuer un traitement de détermination de distance, à partir dudit signal détecté S2 de manière à obtenir le signal radar s(t) indiqué précédemment ;
- des moyens 26 reliés par une liaison 27 auxdits moyens 24 et susceptibles d'effectuer un traitement de focalisation destiné à corriger le déphasage perturbateur existant dans ledit signal s(t) et dû notamment au déplacement du radar D1 à synthèse d'ouverture embarqué à bord dudit aéronef, de manière à obtenir un signal corrigé ;
- des moyens 28 reliés par une liaison 29 auxdits moyens 26 et susceptibles d'effectuer un traitement de détermination de fréquence, à partir dudit signal corrigé ; et

- des moyens 30 reliés par une liaison 31 auxdits moyens 28 et susceptibles d'effectuer un traitement de transposition destiné à transposer, dans un repère de référence lié audit territoire observé, les résultats obtenus à partir des opérations précédentes et définis dans un repère de distance et de fréquence lié au radar, de manière à former une image radar définie dans ledit repère de référence lié au territoire observé.

Selon l'invention, le dispositif 1 est associé audit radar D1 ou intégré dans ce dernier. Plus précisément, la liaison 3 d'entrée du dispositif 1 est liée à la liaison 27 et la liaison 8 de sortie est notamment raccordée aux moyens 26 réalisant le traitement de focalisation.

Cette application peut être mise en oeuvre selon deux modes de réalisation différents.

Dans un premier mode de réalisation, lesdits moyens 26 utilisent à la fois les informations transmises par le dispositif 1 et des informations transmises par des équipements auxiliaires de navigation, non représentés. Dans ce cas, le dispositif 1 peut être utilisé pour affiner la correction du déphasage perturbateur, réalisée de façon usuelle, ce qui permet de diminuer les contraintes imposées auxdits équipements auxiliaires.

Dans un second mode de réalisation, lesdits moyens 26 réalisent la correction du déphasage perturbateur uniquement à partir des informations transmises par le dispositif 1 conforme à l'invention.

On sait en outre que les moyens 30 nécessitent également pour leur traitement des données de navigation fournies par des équipements auxiliaires.

Aussi, selon l'invention, pour que le radar D1 soit complètement indépendant de tels équipements auxiliaires, un perfectionnement dudit second mode de réalisation prévoit de transmettre également auxdits moyens 30 les informations déterminées par le dispositif 1. Pour le traitement mis en oeuvre dans ce cas, on peut se référer à la demande de brevet français précitée n° 95 14555.

Ainsi, on obtient un radar D1 à synthèse d'ouverture entièrement autonome, vis-à-vis des équipements de navigation.

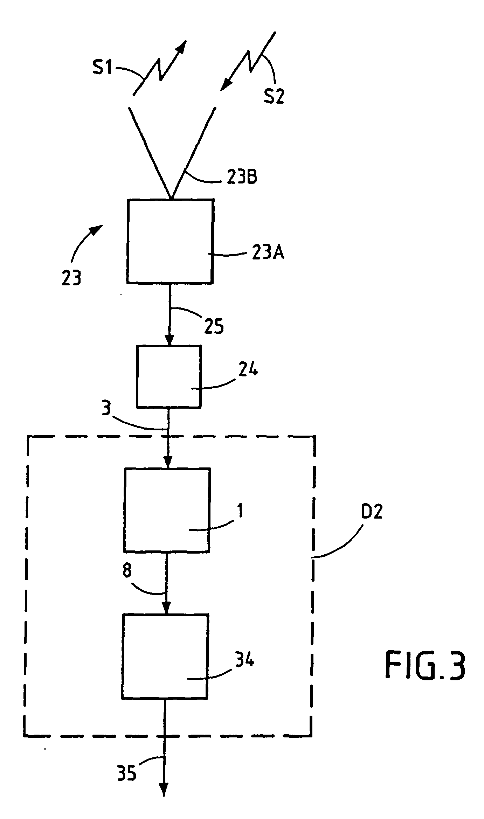

Dans une seconde application représentée schématiquement sur la figure 3, le dispositif 1 conforme à l'invention est associé à un dispositif D2 susceptible de déterminer des informations cinématiques d'un aéronef porteur d'un radar à synthèse d'ouverture, dont on a uniquement représenté les moyens 23 et 24 nécessaires pour la mise en oeuvre de la présente application.

De façon connue, un tel dispositif D2 comporte :

- des premiers moyens de calcul pour déterminer le gradient Doppler du déphasage perturbateur des signaux radar détectés par ledit radar à synthèse d'ouverture ; et
- des seconds moyens de calcul 34 pour déduire dudit gradient Doppler, de façon usuelle, lesdites informations cinématiques, en particulier la vitesse de l'aéronef et/ou son accélération radiale.

Selon l'invention, lesdits premiers moyens de calcul sont réalisés sous forme du dispositif 1 conforme à l'invention.

On notera que ledit dispositif D2 peut transmettre les informations ainsi déterminées, par l'intermédiaire d'une liaison 35, à un dispositif utilisateur non représenté. Ces informations peuvent notamment être utilisées pour le recalage de la navigation, par exemple pour recaler une centrale inertielle embarquée sur ledit aéronef.


**Revendications**

1.  Procédé d'évaluation du déphasage perturbateur des signaux radar d'un radar à synthèse d'ouverture, **caractérisé en ce que :**

    - on effectue une pluralité d'opérations complexes dans chacune desquelles :

        A/ on mesure N signaux radar successifs, N étant un nombre entier prédéfini, lesdits signaux radar étant des signaux complexes définis dans le domaine temporel ;
        B/ on répète N/(2K) fois les opérations suivantes, $\underline{i}$ variant de 1 à N/(2K), K étant un entier prédéfini inférieur à N/2 :

            $\alpha$) à partir des N signaux radar successifs mesurés, on calcule le produit conjugué desdits signaux radar initiaux et desdits signaux radar décalés de i$\tau$, $\tau$ étant une variable temporelle ;
            $\beta$) on calcule le double du carré de la transformée de Fourier dudit produit conjugué ;
            $\gamma$) on réalise une transposition de manière à faire dépendre d'un gradient Doppler $\mu$ ledit double du

carré de la transformée de Fourier dudit produit conjugué, calculé à l'étape β) et dépendant de la fréquence f̱, et ceci en remplaçant la fréquence f̱ par l'expression (μ.i.τ), τ étant une variable temporelle ;

C/ pour les valeurs de μ, on calcule la racine carrée de la somme des résultats obtenus à l'étape γ) pour les N/(2K) variations de i̱, de manière à obtenir l'écart-type du spectre de puissance σ des signaux radar ;
D/ à partir des signaux radar mesurés à l'étape A/, on détermine la puissance moyenne m̱ desdits signaux ;
E/ à partir dudit écart-type du spectre de puissance σ et de ladite puissance moyenne m̱, on calcule le contraste χ à partir de la relation χ = (σ/m) ; et

- à partir de la pluralité de valeurs de contraste ainsi calculées, on détermine le maximum dudit contraste, de manière à mettre en évidence un gradient Doppler optimal μo, à partir duquel on évalue ledit déphasage perturbateur, à l'aide de l'expression $\exp(j\pi\mu ot^2)$ qui représente ledit déphasage perturbateur.

2. Procédé selon la revendication 1,
   **caractérisé en ce que** ledit entier K est supérieur ou égal à 10.

3. Procédé selon l'une des revendications 1 et 2,
   **caractérisé en ce qu'**à l'étape D/, la puissance moyenne m̱ est calculée à partir de l'expression :

$$m = \sum_{j=1}^{j=N} \left| sj \right|^2$$

les signaux sj étant les signaux radar mesurés à l'étape A/.

4. Procédé selon l'une quelconque des revendications précédentes, **caractérisé en ce que** le maximum du contraste est déterminé par moyenne de ladite pluralité des valeurs de contraste calculées.

5. Dispositif d'évaluation du déphasage perturbateur des signaux radar d'un radar à synthèse d'ouverture,
   **caractérisé en ce qu'**il comporte :

   - des premiers moyens (2) pour calculer l'écart-type du spectre de puissance des N signaux radar successifs mesurés, lesdits premiers moyens (2) comprenant des éléments de calcul (9 à 12) qui réalisent N/(2K) fois des opérations à partir de signaux radar, i̱ variant de 1 à N/(2K) et K étant un entier prédéfini inférieur à N/2, N étant un nombre entier prédéfini, lesdits premiers moyens (2) comprenant :

     . un élément de calcul (9) qui calcule le produit conjugué des signaux radar initiaux et des signaux radar décalés de iτ, τ étant une variable temporelle ;
     . un élément de calcul (10) qui calcule la transformée de Fourier dudit produit conjugué ;
     . un élément de calcul (11) qui calcule le double du carré de ladite transformée de Fourier ; et
     . un élément de calcul (12) qui réalise une transposition de manière à faire dépendre d'un gradient Doppler μ ledit double du carré de ladite transformée de Fourier, qui dépend de la fréquence f̱, en remplaçant la fréquence f̱ par l'expression (μ.i.τ), τ étant une variable temporelle, lesdits premiers moyens (2) comprenant de plus un élément de calcul (17) qui calcule, pour les valeurs de μ, la racine carrée de la somme des différents résultats obtenus pour les N/(2K) variations de i̱ de manière à former ledit écart-type du spectre de puissance σ ;

   - des deuxièmes moyens (4) pour calculer la puissance moyenne m̱ desdits signaux radar reçus ; et
   - des troisièmes moyens (5) reliés auxdits premiers et deuxièmes moyens (2, 4), pour calculer, à partir des résultats obtenus desdits premiers et deuxièmes moyens (2, 4), des contrastes, à l'aide de la relation χ=(σ/m), et pour déterminer, à partir de la pluralité de valeurs de contraste ainsi calculées, le maximum dudit contraste de manière à mettre en évidence un gradient Doppler optimal μo, à partir duquel est évalué ledit déphasage perturbateur, à l'aide de l'expression $\exp(j\pi\mu ot^2)$ qui représente ledit déphasage perturbateur.

6. Radar à synthèse d'ouverture embarqué à bord d'un aéronef et comportant :

   - des moyens (23) pour émettre un rayonnement électromagnétique (S1) en direction d'un territoire observé et survolé par ledit aéronef ;

- des moyens (23) pour détecter un signal (S2) correspondant audit rayonnement électromagnétique renvoyé par ledit territoire observé et survolé ;
- des moyens (24) pour effectuer un traitement de détermination de distance, à partir dudit signal détecté (S2) ;
- des moyens de focalisation (26) destinés à corriger un déphasage perturbateur existant dans ledit signal détecté et dû notamment au déplacement dudit radar à synthèse d'ouverture de manière à obtenir un signal corrigé ;
- des moyens (28) pour effectuer un traitement de détermination de fréquence, à partir dudit signal corrigé ; et
- des moyens de transposition (30) destinés à transposer, dans un repère de référence lié audit territoire observé, les résultats obtenus à partir des opérations précédentes et définis dans un repère de distance et de fréquence lié au radar, de manière à former une image radar définie dans ledit repère de référence lié au territoire observé,

**caractérisé en ce qu'**il comporte, de plus, le dispositif (1) spécifié sous la revendication 5 qui comprend une liaison (3) d'entrée qui est liée à la liaison (27) liant les moyens de focalisation (26) aux moyens (24) pour effectuer un traitement de détermination de distance, et une liaison (8) de sortie qui est raccordée aux moyens de focalisation (26), et **en ce que** lesdits moyens de focalisation (26) utilisent des informations transmises par ledit dispositif (1).

7. Radar à synthèse d'ouverture selon la revendication 6, **caractérisé en ce que**, pour déterminer ledit déphasage perturbateur, lesdits moyens de focalisation (26) utilisent uniquement des informations transmises par ledit dispositif (1).

8. Radar à synthèse d'ouverture selon la revendication 7, **caractérisé en ce que** lesdits moyens de transposition (30) utilisent des informations transmises par ledit dispositif (1).

9. Dispositif pour déterminer des informations cinématiques d'un aéronef porteur d'un radar à synthèse d'ouverture, ledit dispositif (D2) comportant :

- des premiers moyens de calcul (1) pour déterminer le gradient Doppler du déphasage perturbateur des signaux radar détectés par ledit radar à synthèse d'ouverture ; et
- des seconds moyens de calcul (34) pour déduire dudit gradient Doppler lesdites informations cinématiques,

**caractérisé en ce que** lesdits premiers moyens de calcul (1) sont réalisés sous forme du dispositif (1) spécifié sous la revendication 5.

**Claims**

1. A method for evaluating a disturbing phase shift of radar signals in a synthetic aperture radar, **characterised in that**:

- a plurality of complex operations is carried out, in each of which:

A/ N consecutive radar signals are measured, N being a predefined integer, said radar signals being complex signals defined in the time domain;
B/ the following operations are repeated N/(2K) times, $\underline{i}$ ranging from 1 to N/(2K), K being a predefined integer of less than N/2:

$\alpha$) from the N consecutive radar signals measured, the conjugate product of said initial radar signals and of said $i\tau$-offset radar signals is calculated, $\tau$ being a time variable;
$\beta$) the square double of the Fourier transform of said conjugate product is calculated;
$\gamma$) a transposition is carried out so that said square double of the Fourier transform of said conjugate product, calculated in step $\beta$) and depending on the frequency $\underline{f}$, depends on a Doppler gradient $\mu$, and this by replacing the frequency $\underline{f}$ with the expression $(\mu.i.\tau)$, $\tau$ being a time variable;

C/ for the values of $\mu$, the square root of the sum of the results obtained in step $\gamma$) for the N/(2K) variations of $\underline{i}$ is calculated, so as to obtain the standard deviation of the power spectrum $\sigma$ of the radar signals;
D/ from the radar signals measured in step A/, the average power $\underline{m}$ of said signals is determined;
E/ from said standard deviation of the power spectrum $\sigma$ and said average power $\underline{m}$, the contrast $\chi$ is

calculated from the relationship $\chi = (\sigma/m)$; and

- from the plurality of contrast values thus calculated, the maximum of said contrast is determined, so as to bring out an optimum Doppler gradient $\mu_o$, from which said disturbing phase shift is evaluated, using the expression $\exp(j\pi\mu_o t^2)$ which represents said disturbing phase shift.

2. The method according to claim 1,
   **characterised in that** said integer K is equal to or higher than 10.

3. The method according to claims 1 and 2,
   **characterised in that** in step D/, the average power $\underline{m}$ is calculated from the expression:

$$m = \sum_{j=1}^{j=n} \left| s_j \right|^2$$

the signals $s_j$ being the radar signals measured in step A/.

4. The method according to any of the preceding claims, **characterised in that** the contrast maximum is determined by averaging said plurality of contrast values calculated.

5. Device for evaluating the disturbing phase shift of radar signals in a synthetic aperture radar,
   **characterised in that** it includes:

   - first means (2) for calculating the standard deviation of the power spectrum of the N consecutive radar signals measured, said first means (2) comprising calculating elements (9-12) which carry out N/(2K) times operations from radar signals, $\underline{i}$ ranging from 1 to N/(2K) and K being a predefined integer of less than N/2, N being a predefined integer, said first means (2) comprising :

     • a calculating element (9) which calculates the conjugate product of the initial radar signals and the $i\tau$-offset radar signals, $\tau$ being a time variable ;
     • a calculating element (10) which calculates the Fourier transform of said conjugate product;
     • a calculating element (11) which calculates the square double of said Fourier transform; and
     • a calculating element (12) which carries out a transposition so that said square double of the Fourier transform, which depends on the frequency $\underline{f}$, depends on a Doppler gradient $\mu$, by replacing the frequency $\underline{f}$ with the expression $(\mu, i.\tau)$, $\tau$ being a time variable,

   said first means (2) further comprising a calculating element (17) which calculates, for the values of $\mu$, the square root of the sum of the different results obtained for the N/(2K) variations of $\underline{i}$ so as to form the standard deviation of the power spectrum $\sigma$;
   - second means (4) for calculating the average power $\underline{m}$ of said radar signals received; and
   - third means (5) connected to said first and second means (2,4) for calculating, from the results obtained from said first and second means (2,4), contrasts, using the relationship $\chi = (\sigma/m)$, and for determining, from the plurality of contrast values thus calculated, the maximum of said contrast so as to bring out an optimum Doppler gradient $\mu_o$, from which said disturbing phase shift is evaluated, using the expression $\exp(j\pi\mu_o t^2)$ which represents said disturbing phase shift.

6. A synthetic aperture radar on board an aircraft and including:

   - means (23) for emitting an electromagnetic radiation (S1) towards a territory observed and overflown by said aircraft;
   - means (23) for detecting a signal (S2) corresponding to said electromagnetic radiation sent back by said territory observed and overflown;
   - means (24) for carrying out a remote determination processing, from said signal (S2) detected;
   - focusing means (26) for correcting a disturbing phase shift present in said detected signal and in particular due to the movement of said synthetic aperture radar so as to obtain a corrected signal;
   - means (28) for carrying out a frequency determination processing, from said corrected signal; and

- transposition means (30) for transposing, in a reference marker related to said observed territory, the results obtained from the preceding operations and defined in a distance and frequency marker related to the radar, so as to form a radar image defined in said reference marker related to the observed territory,

**characterised in that** it further includes the device (1) set out in claim 5 which includes an input link (3) which is linked to the link (27) linking the focusing means (26) to the means (24) for carrying out a remote determination processing, and an output link (8) which is connected to the focusing means (26), and **in that** said focusing means (26) use information transmitted by said device (1).

7. The synthetic aperture radar according to claim 6,
   **characterised in that**, for determining said disturbing phase shift, said focusing means (26) only use information transmitted by said device (1).

8. The synthetic aperture radar according to claim 7,
   **characterised in that** said transposition means (30) use information transmitted by said device (1).

9. A device for determining kinematics information of an aircraft carrying a synthetic aperture radar, said device (D2) including:

   - first calculating means (1) for determining the Doppler gradient of the disturbing phase shift of radar signals detected by said synthetic aperture radar; and
   - second calculating means (34) for inferring said kinematics information from said Doppler gradient,

   **characterised in that** said first calculating means (1) are in the form of the device (1) set out in claim 5.

**Patentansprüche**

1. Verfahren zum Auswerten der störenden Phasenverschiebung der Radarsignale eines Synthetik-Apertur-Radars,
   **dadurch gekennzeichnet, dass:**

   - eine Vielzahl von komplexen Operationen ausgeführt wird, bei jeder von denen:

     A/ N aufeinanderfolgende Radarsignale gemessen werden, wobei N eine vordefinierte ganze Zahl ist, wobei die Radarsignale komplexe Signale sind, die im Zeitbereich definiert sind;
     B/ die folgenden Operationen N/2K-mal wiederholt werden, wobei $i$ von 1 bis N/(2K) variiert, wobei K eine vordefinierte ganze Zahl kleiner als N/2 ist:

     $\alpha$) aus den N gemessenen aufeinanderfolgenden Radarsignalen das konjugierte Produkt der Anfangs-radarsignale und der um $i\tau$ verschobenen Radarsignale berechnet wird, wobei $\tau$ eine Zeitvariable ist;
     $\beta$) das doppelte Quadrat der Fourier-Transformierten des konjugierten Produkts berechnet wird;
     $\gamma$) eine Transposition ausgeführt wird, um das doppelte Quadrat der Fourier-Transformierten des konjugierten Produkts, das in Schritt $\beta$) berechnet wird und von der Frequenz $f$ abhängig ist, von einem Doppler-Gradienten $\mu$ abhängig zu machen, und zwar indem die Frequenz $f$ durch den Ausdruck ($\mu.i.\tau$) ersetzt wird, wobei $\tau$ eine Zeitvariable ist;

     C/ für die Werte von $\mu$ die Quadratwurzel der Summe der in Schritt $\gamma$) erzielten Ergebnisse für die N/(2K) Variationen von $i$ berechnet wird, um die Standardabweichung des Leistungsspektrums $\sigma$ der Radarsignale zu erzielen;
     D/ aus den in Schritt A/ gemessenen Radarsignalen die durchschnittliche Leistung $m$ der Signale bestimmt wird;
     E/ aus der Standardabweichung des Leistungsspektrums $\sigma$ und der durchschnittlichen Leistung $m$ der Kontrast $\chi$ aus der Beziehung $\chi = (\sigma/m)$ berechnet wird; und

   - aus der Vielzahl der somit berechneten Kontrastwerte der Höchstwert des Kontrastes bestimmt wird, um einen optimalen Doppler-Gradienten $\mu_o$ hervorzuheben, aus dem die störende Phasenverschiebung anhand des Ausdrucks $\exp(j\Pi_o t^2)$, der die störende Phasenverschiebung darstellt, ausgewertet wird.

**2.** Verfahren nach Anspruch 1,
**dadurch gekennzeichnet, dass** die Ganzzahl K größer oder gleich 10 ist.

**3.** Verfahren nach einem der Ansprüche 1 und 2,
**dadurch gekennzeichnet, dass** in Schritt D/ die durchschnittliche Leistung $\underline{m}$ aus folgendem Ausdruck berechnet wird:

$$m = \sum_{j=1}^{j=N} |sj|^2$$

wobei die Signale sj die in Schritt A/ gemessenen Radarsignale sind.

**4.** Verfahren nach einem der vorhergehenden Ansprüche, **dadurch gekennzeichnet, dass** der Höchstwert des Kontrastes durch einen Mittelwert der Vielzahl der berechneten Kontrastwerte bestimmt wird.

**5.** Vorrichtung zum Auswerten der störenden Phasenverschiebung der Radarsignale eines Synthetik-Apertur-Radars, **dadurch gekennzeichnet, dass** sie folgendes umfasst:

- erste Mittel (2) zum Berechnen der Standardabweichung des Leistungsspektrums der N gemessenen aufeinanderfolgenden Radarsignale, wobei die ersten Mittel (2) Rechenmittel (9 bis 12) umfassen, die N/(2K) mal Operationen von Radarsignalen ausgehend durchführen, wobei $\underline{i}$ von 1 bis N/(2K) variiert und K eine vordefinierte Ganzzahl kleiner als N/2 ist, wobei N eine vordefinierte Ganzzahl ist, wobei die ersten Mittel (2) folgendes umfassen:

　　• ein Rechenelement (9), welches das konjugierte Produkt der Anfangsradarsignale und der um i$\tau$ verschobenen Radarsignale berechnet, wobei $\tau$ eine Zeitvariable ist;
　　• ein Rechenelement (10), das die Fourier-Transformierte des konjugierten Produkts berechnet;
　　• ein Rechenelement (11), welches das doppelte Quadrat der Fourier-Transformierten berechnet; und
　　• ein Rechenelement (12), das eine Transposition ausführt, um das doppelte Quadrat der Fourier-Transformierten, die von der Frequenz $\underline{f}$ abhängt, von einem Doppler-Gradienten $\mu$ abhängig zu machen, indem die Frequenz $\underline{f}$ durch den Ausdruck ($\mu.i.\tau$) ersetzt wird, wobei $\tau$ eine Zeitvariable ist,

wobei die ersten Mittel (2) ferner ein Rechenelement (17) umfassen, das für die Werte von $\mu$ die Quadratwurzel der Summe der verschiedenen Ergebnisse berechnet, die für die N/(2K) Variationen von $\underline{i}$ erzielt wurden, um die Standardabweichung des Leistungsspektrums $\sigma$ zu bilden;
- zweite Mittel (4) zum Berechnen der durchschnittlichen Leistung $\underline{m}$ der empfangenen Radarsignale; und
- dritte Mittel (5), die mit den ersten und zweiten Mitteln (2, 4) verbunden sind, um aus den von den ersten und zweiten Mitteln (2, 4) erzielten Ergebnissen anhand der Beziehung $\chi = (\sigma/m)$ Kontraste zu berechnen, und um aus der Vielzahl der somit berechneten Kontrastwerte den Höchstwert des Kontrastes zu bestimmen, um einen optimalen Doppler-Gradienten $\mu o$ hervorzuheben, aus dem die störende Phasenverschiebung anhand des Ausdrucks exp(j$\Pi \mu o t^2$), der die störende Verschiebung darstellt, ausgewertet wird.

**6.** Synthetik-Apertur-Radar an Bord eines Luftfahrzeugs und umfassend:

- Mittel (23) zum Emittieren einer elektromagnetischen Strahlung (S1) auf ein von dem Luftfahrzeug beobachteten und überflogenen Gelände;
- Mittel (23) zum Ermitteln eines Signals (S2), das der elektromagnetischen Strahlung entspricht, die von dem beobachteten und überflogenen Gelände zurückgestrahlt wird;
- Mittel (24) zum Ausführen einer Verarbeitung zur Entfernungsbestimmung aus dem ermittelten Signal (S2);
- Mittel (26) zum Fokussieren, die dazu gedacht sind, eine störende Phasenverschiebung zu korrigieren, die in dem ermittelten Signal vorliegt und insbesondere auf die Bewegung des Synthetik-Apertur-Radars zurückzuführen ist, um ein korrigiertes Signal zu erzielen;
- Mittel (28) zum Ausführen einer Verarbeitung zur Frequenzbestimmung aus dem korrigierten Signal; und
- Mittel (30) zum Transponieren, die dazu gedacht sind, die aus den vorhergehenden Operationen erzielten Ergebnisse, die in einer mit dem Radargerät zusammenhängenden Entfernungs- und Frequenzmarkierung definiert sind, auf eine Bezugsmarkierung zu transponieren, die mit dem beobachteten Gelände zusammenhängt, um ein Radarbild zu bilden, das in der mit dem beobachteten Gelände zusammenhängenden Markierung definiert ist,

**dadurch gekennzeichnet, dass** er ferner die in Anspruch 5 angegebene Vorrichtung (1) umfasst, die eine Eingangsverbindung (3), die mit der Verbindung (27) verbunden ist, welche die Fokussierungsmittel (26) mit den Mitteln (24) zum Ausführen einer Verarbeitung zur Entfernungsbestimmung verbindet, und eine Ausgangsverbindung (8), die an die Fokussierungsmittel (26) angeschlossen ist, umfasst, und dass die Fokussierungsmittel (26) Informationen verwenden, die von der Vorrichtung (1) übertragen werden.

7. Synthetik-Apertur-Radar nach Anspruch 6,
   **dadurch gekennzeichnet, dass** zum Bestimmen der störenden Phasenverschiebung die Fokussierungsmittel (26) nur Informationen verwenden, die von der Vorrichtung (1) übertragen werden.

8. Synthetik-Apertur-Radar nach Anspruch 7,
   **dadurch gekennzeichnet, dass** die Transpositionsmittel (30) Informationen verwenden, die von der Vorrichtung (1) übertragen werden.

9. Vorrichtung zum Bestimmen kinematischer Informationen eines Luftfahrzeugs, das einen Synthetik-Apertur-Radar mit sich führt, wobei die Vorrichtung (D2) folgendes umfasst:

   - erste Rechenmittel (1), um den Doppler-Gradienten der störenden Phasenverschiebung der von dem Synthetik-Apertur-Rader ermittelten Radarsignale zu bestimmen; und
   - zweite Rechenmittel (34), um die kinematischen Informationen von dem Doppler-Gradienten abzuleiten;

   **dadurch gekennzeichnet, dass** die ersten Rechenmittel (1) in Form der in Anspruch 5 angegebenen Vorrichtung (1) ausgebildet sind.

FIG.1

## FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 9514555
- US 5394151 A
- WO 8810434 A